# EUROPEAN PATENT APPLICATION

(11) **EP 4 277 211 A1**
(43) Date of publication of application: **15.11.2023**
(21) Application number: 21922466.4
(22) Date of filing: 18.11.2021
(51) Int. Cl.: H04L 12/28

(54) **INTERFACE MANAGEMENT METHOD FOR ACCESSED USER EQUIPMENT, AND ACCESSED USER EQUIPMENT**

(30) Priority: 30.01.2021 CN 202110131446
(71) Applicant: Huawei Technologies Co., Ltd., Shenzhen, Guangdong 518129 (CN)
(72) Inventor: CHEN, Liang, Shenzhen, Guangdong 518129 (CN)
(74) Representative: Körber, Martin Hans
(86) International application number: PCT/CN2021/131364
(87) International publication number: WO 2022/160876

(57) **Abstract**

Embodiments of this application provide a port management method for user access equipment, and user access equipment. In the method, the user access equipment can receive at least two uplink data packets, and the at least two uplink data packets are uplink data packets of a same class of service. The user access equipment sends at least two processed uplink data packets through at least two uplink ports, where IP addresses of the at least two uplink ports each are a first IP address, source IP addresses of a first uplink data packet and a second uplink data packet in the at least two processed uplink data packets each are the first IP address, and the first uplink data packet and the second uplink data packet have different VLAN values. It can be learned that the user access equipment can implement uplink data transmission based on different VLANs by setting a same source IP address and different VLAN values for data packets of a same class of service. This helps reduce IP address resource consumption.

## Description

This application claims priority to Chinese Patent Application No. 202110131446.8, filed with the China National Intellectual Property Administration on January 30, 2021 and entitled "PORT MANAGEMENT METHOD FOR USER ACCESS EQUIPMENT, AND USER ACCESS EQUIPMENT", which is incorporated herein by reference in its entirety.

### TECHNICAL FIELD

This application relates to the field of communication technologies, and in particular, to a port management method for user access equipment, and user access equipment.

### BACKGROUND

With development of diversified network services, application scenarios of home broadband are becoming increasingly abundant. However, when broadband physical resources are limited, a network needs to provide quality assurance for some services requiring high quality. Currently, a concept of a next-generation access network slice is proposed. A network slice may be considered as an independent network that implements committed quality based on a specific application. The network slice usually needs end-to-end splitting. For example, in an optical access network (optical access network, OAN), optical network terminal (optical network terminal, ONT) equipment may be considered as an endpoint of the network slice. In an existing solution, each independent wide area network (wide area network, WAN) port in the ONT needs to be configured with different internet protocol (Internet protocol, IP) addresses, to transmit a service requiring high quality. In this solution, an operator needs to plan new IP address resource pools and virtual local area network (virtual local area network, VLAN) resources for a plurality of network slices. As a result, IP address resource consumption increases continuously, and an IP network becomes more complex. This increases network operation and maintenance costs.

### SUMMARY

Embodiments of this application provide a port management method for user access equipment, and user access equipment. The method helps reduce IP address resource consumption, reduce IP network complexity, and reduce network operation and maintenance costs.

According to a first aspect, an embodiment of this application provides a port management method for user access equipment. The user access equipment receives at least two uplink data packets, and the at least two uplink data packets include a first uplink data packet and a second uplink data packet. The first uplink data packet includes data of a first service type, the second uplink data packet includes data of a second service type, and the first service type and the second service type have a same class of service. The user access equipment sends the processed first uplink data packet and the processed second uplink data packet through any one of at least two uplink ports, where IP addresses of the at least two uplink ports each are a first IP address, source IP addresses of a processed first uplink data packet and a processed second uplink data packet each are the first IP address, and the first uplink data packet and the second uplink data packet have different VLAN values.

It can be learned that, in an uplink transmission scenario (a scenario in which a terminal transmits data to a service server), the user access equipment can receive at least two uplink data packets of a same class of service, and set source IP addresses of the at least two uplink data packets to a same source IP address. The user access equipment may further set VLAN values of the first uplink data packet and the second uplink data packet to different VLAN values, that is, distinguish the first uplink data packet and the second uplink data packet of different service types at a same class of service based on different VLANs. Based on the foregoing settings of the first uplink data packet and the second uplink data packet, the user access equipment sends the processed first uplink data packet and the processed second uplink data packet through the any one of the at least two uplink ports. This helps reduce IP address resource consumption, reduce IP network complexity, and reduce network operation and maintenance costs.

In a possible design, the user access equipment sends at least two processed uplink data packets through any two different uplink ports in the at least two uplink ports.

It can be learned that the user access equipment can further send the first uplink data packet and the second uplink data packet through different uplink ports, and the different uplink ports have a same IP address and different VLAN values.

In a possible design, the user access equipment determines, that a service type of the first uplink data packet in the at least two uplink data packets is the first service type, and a service type of the second uplink data packet is the second service type.

It can be learned that, after receiving the at least two uplink data packets, the user access equipment needs to identify service types corresponding to the at least two uplink data packets, so as to set VLAN values of data packets of different service type to different VLAN values.

In a possible design, the user access equipment sets source IP addresses of the first uplink data packet and the second uplink data packet each to the first IP address, and sets VLAN values of the first uplink data packet and the second uplink data packet to different VLAN values.

It can be learned that the user access equipment can set the source IP addresses of the first uplink data packet and the source IP address of the second uplink data packet to a same specified IP address, and set the VLAN values of the first uplink data packet the second uplink data packet to different VLAN values. When a port that carries the first uplink data packet or the second uplink data packet fails, the user access equipment resends the first uplink data packet or the second uplink data packet through a port that has the same IP address. This helps reduce a probability of a service switching failure.

In a possible design, the user access equipment sends the first uplink data packet through a first uplink port in any two uplink ports, and sends the second uplink data packet through a second uplink port in the any two uplink ports, where the first uplink port and the second uplink port have a same IP address and different VLAN values.

In a possible design, the first uplink data packet and the second uplink data packet have a same destination IP address, the first uplink data packet is sent from the first uplink port belonging to a first VLAN, and the second uplink data packet is sent from the second uplink port belonging to a second VLAN.

It can be learned that, in this embodiment, IP-based routing and VLAN-based routing can be combined together to form a new unified forwarding rule, and the user access equipment can forward data according to the new unified forwarding rule.

In a possible design, the first uplink data packet and the second uplink data packet have different destination IP addresses, and the first uplink data packet and the second uplink data packet are sent from the any two uplink ports.

In a possible design, the user access equipment receives at least two downlink data packets through the at least two uplink ports. Any two uplink ports have a same IP address and different VLAN values, the at least two downlink data packets include a first downlink data packet and a second downlink data packet, the first downlink data packet includes data of the first service type, the second downlink data packet includes data of the second service type, and fields in the at least two downlink data packets include a same destination IP address and different VLAN values. The user access equipment sends the at least two downlink data packets to a terminal through different downlink paths.

It can be learned that, in a downlink transmission scenario (a scenario in which a service server transmits data to the terminal), the user access equipment can receive, through the any two uplink ports, at least two downlink data packets of a same class of service. The fields in the at least two downlink data packets include a same IP address and different VLAN values, that is, the first downlink data packet and the second downlink data packet are downlink data packets of different service types, and the first downlink data packet and the second downlink data packet of different service types may be distinguished based on different VLAN values.

In a possible design, the user access equipment receives the first downlink data packet through a first uplink port belonging to a first VLAN, and receives the second downlink data packet through a second uplink port belonging to a second VLAN.

It can be learned that the user access equipment can receive the first downlink data packet and the second downlink data packet of different service types separately through different uplink ports belonging to different VLANs.

According to a second aspect, an embodiment of this application provides user access equipment. The user access equipment includes a downlink port, a processor, and at least two uplink ports. The downlink port is configured to receive at least two uplink data packets, where the at least two uplink data packets include a first uplink data packet and a second uplink data packet, the first uplink data packet includes data of a first service type, the second uplink data packet includes data of a second service type, and the first service type and the second service type have a same class of service. IP addresses of the at least two uplink ports each are a first IP address. The processor is configured to set source IP addresses of the first uplink data packet and the second uplink data packet each to the first IP address, and set VLAN values of the first uplink data packet and the second uplink data packet to different VLAN values. Any one of the at least two uplink ports is configured to send at least two processed uplink data packets.

In a possible design, any two different uplink ports in the at least two uplink ports are configured to send the at least two processed uplink data packets.

In a possible design, the processor is further configured to determine that a service type of the first uplink data packet in the at least two uplink data packets is the first service type, and a service type of the second uplink data packet is the second service type.

In a possible design, the processor is further configured to:
set source IP addresses of the first uplink data packet and the second uplink data packet each to the first IP address; and
set VLAN values of the first uplink data packet and the second uplink data packet to different VLAN values.

In a possible design, a first uplink port in any two uplink ports is configured to send the first uplink data packet, a second uplink port in the any two uplink ports is configured to send the second uplink data packet, and the first uplink port and the second uplink port have a same IP address and different VLAN values.

In a possible design, the first uplink data packet and the second uplink data packet have a same destination IP address, the first uplink data packet is sent from the first uplink port belonging to a first VLAN, and the second uplink data packet is sent from the second uplink port belonging to a second VLAN.

In a possible design, the first uplink data packet and the second uplink data packet have different destination IP addresses, and the first uplink data packet and the second uplink data packet are sent from any two uplink ports.

In a possible design, any two of the at least two uplink ports are further configured to receive at least two downlink data packets, where the any two uplink ports have a same IP address and different VLAN values, the at least two downlink data packets include a first downlink data packet and a second downlink data packet, the first downlink data packet includes data of the first service type, the second downlink data packet includes data of the second service type, and fields in the at least two downlink data packets include a same destination IP address and different VLAN values. The downlink port is further configured to send the at least two downlink data packets to a terminal through different downlink paths.

In a possible design, a first uplink port that belongs to a first VLAN and that is in the at least two uplink ports is configured to receive the first downlink data packet, and a second uplink port that belongs to a second VLAN and that is in the at least two uplink ports is configured to receive the second downlink data packet.

According to a third aspect, an embodiment of this application provides user access equipment. The equipment has a function of implementing the port management method for the user access equipment provided in the first aspect. The function may be implemented by hardware, or may be implemented by hardware by executing corresponding software. The hardware or the software includes one or more modules corresponding to the function.

According to a fourth aspect, an embodiment of this application provides a computer-readable storage medium. The readable storage medium includes a program or instructions. When the program or the instructions is/are run on a computer, the computer is enabled to perform the method according to any one of the first aspect or the possible implementations of the first aspect.

According to a fifth aspect, an embodiment of this application provides a chip or a chip system. The chip or the chip system includes at least one processor and an interface, the interface and the at least one processor are interconnected through a line, and the at least one processor is configured to run a computer program or instructions, to perform the method described in any one of the first aspect or the possible implementations of the first aspect.

The interface in the chip may be an input/output port, a pin, a circuit, or the like.

The chip system in the foregoing aspects may be a system-on-a-chip (system-on-a-chip, SOC), a baseband chip, or the like. The baseband chip may include a processor, a channel encoder, a digital signal processor, a modem, an interface module, and the like.

In a possible implementation, the chip or the chip system described in this application further includes at least one memory, and the at least one memory stores instructions. The memory may be a storage unit inside the chip, for example, a register or a cache, or may be a storage unit (for example, a read-only memory or a random access memory) of the chip.

According to a sixth aspect, an embodiment of this application provides a computer program or a computer program product, including code or instructions. When the code is run or the instructions are run on a computer, the computer is enabled to perform the method according to any one of the first aspect or the possible implementations of the first aspect.

### BRIEF DESCRIPTION OF DRAWINGS

FIG. 1 is a schematic diagram of a home scenario-level new application network bearing;
FIG. 2 is a schematic diagram of WAN port configuration information of an optical network terminal;
FIG. 3 is a schematic diagram of a network scenario according to an embodiment of this application;
FIG. 4 is a schematic diagram of another network scenario according to an embodiment of this application;
FIG. 5 is a schematic flowchart of a port management method for user access equipment according to an embodiment of this application;
FIG. 6a is a schematic diagram of a network scenario in which user access equipment sends at least two uplink data packets to a service server according to an embodiment of this application;
FIG. 6b is a schematic diagram of another network scenario in which user access equipment sends at least two uplink data packets to a service server according to an embodiment of this application;
FIG. 6c is a schematic diagram of still another network scenario in which user access equipment sends at least two uplink data packets to a service server according to an embodiment of this application;
FIG. 6d is a schematic diagram of yet another network scenario in which user access equipment sends at least two uplink data packets to a service server according to an embodiment of this application;
FIG. 7 is a schematic diagram of data forwarding based on a same IP address and different VLANs according to an embodiment of this application;
FIG. 8a is a schematic diagram of a network scenario in which a service server sends at least two downlink data packets to user access equipment according to an embodiment of this application;
FIG. 8b is a schematic diagram of another network scenario in which a service server sends at least two downlink data packets to user access equipment according to an embodiment of this application;
FIG. 9 is a schematic diagram of a structure of user access equipment according to an embodiment of this application; and
FIG. 10 is a schematic diagram of a structure of another user access equipment according to an embodiment of this application.

### DESCRIPTION OF EMBODIMENTS

In embodiments of this application, the word "example" or "for example" is used to represent giving an example, an illustration, or a description. Any embodiment or design scheme described as an "example" or "for example" in embodiments of this application should not be explained as being more preferred or having more advantages than another embodiment or design scheme. Exactly, use of the word such as "example" or "for example" is intended to present a relative concept in a specific manner.

The terms "second" and "first" in embodiments of this application are merely intended for a purpose of description, and shall not be understood as an indication or implication of relative importance or implicit indication of a quantity of indicated technical features. Therefore, a feature limited by "second" or "first" may explicitly or implicitly include one or more features. In the descriptions of this application, unless otherwise stated, "a plurality of" means two or more than two.

In this application, the term "at least two" means two or more than two.

It should be understood that the terms used in the descriptions of various examples in this specification are merely intended to describe specific examples, but are not intended to constitute a limitation. The terms "one" ("a" and "an") and "the" of singular forms used in the descriptions of the various examples and the appended claims are also intended to include plural forms, unless otherwise specified in the context clearly.

It should be further understood that, the term "and/or" used in this specification indicates and includes any or all possible combinations of one or more items in associated listed items. The term "and/or" describes an association relationship between associated objects and represents that three relationships may exist. For example, A and/or B may represent the following three cases: Only A exists, both A and B exist, and only B exists. In addition, the character "/" in this application generally indicates an "or" relationship between associated objects.

It should be further understood that sequence numbers of processes do not mean execution sequences in embodiments of this application. The execution sequences of the processes should be determined based on functions and internal logic of the processes, and should not be construed as any limitation on the implementation processes of embodiments of this application.

It should be understood that determining B based on A does not mean that B is determined only based on A, but B may be determined based on A and/or other information.

It should be further understood that the term "include" (or "includes", "including", "comprises", and/or "comprising"), when being used in this specification, specifies the presence of stated features, integers, steps, operations, elements, and/or components, but does not preclude the presence or addition of one or more other features, integers, steps, operations, elements, components, and/or groups thereof.

The following describes the technical solutions in embodiments of this application with reference to the accompanying drawings in embodiments of this application.

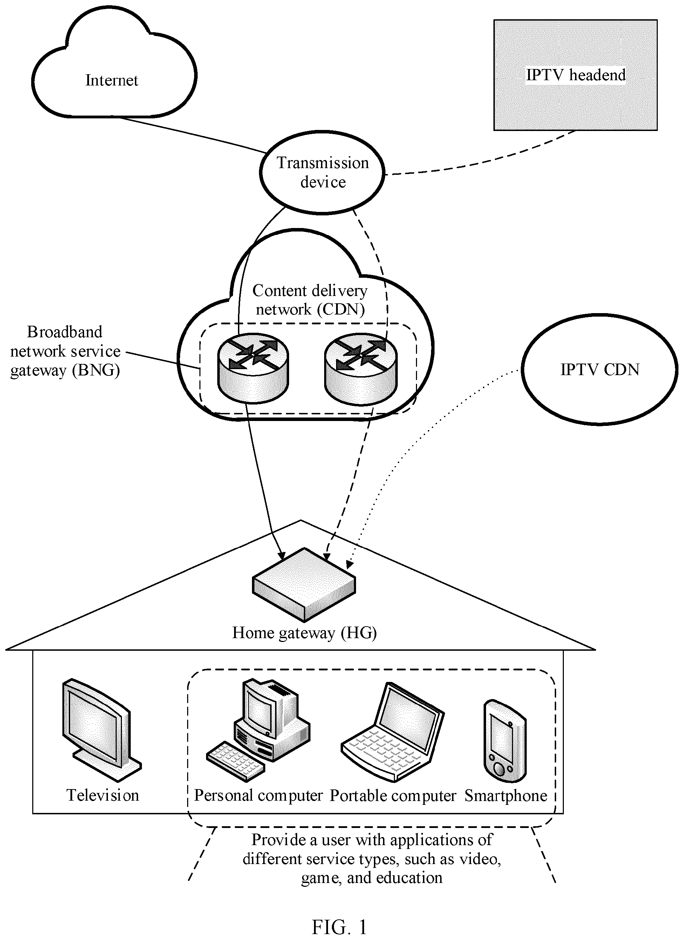

Currently, a home broadband network is mainly used to provide a pipe capability. For example, various services on a live network use a same network pipe, and the services preempt the network pipe. FIG. 1 is a schematic diagram of a home scenario-level new application network bearing. A home scenario shown in FIG. 1 includes two types of networks: an Internet protocol television (Internet protocol television, IPTV) network-wide private line and an ordinary internet, and also includes an IPTV For an IPTV service, an IPTV headend creates the IPTV network-wide private line. The IPTV network-wide private line passes through a content delivery network (content delivery network, CDN) and a broadband network service gateway (broadband network gateway, BNG) to reach a home gateway (home gateway, HG). The HG may transmit various services to a terminal, as shown in FIG. 1.

With development of diversified network services, application scenarios of home broadband are becoming increasingly abundant. For example, home becomes an entertainment room, and a quantity of online games keeps increasing; home becomes a workshop, and a quantity of online office users keeps increasing; or home becomes a classroom, and a quantity of online education users keeps increasing. However, QoS requirements of various services are different. For example, an online game service has a high requirement on a latency, and an online office service or an online education service has a high requirement on bandwidth.

To provide differentiated services for services with different QoS requirements, a concept of a next-generation access network slice is proposed currently. A network slice may be considered as an independent network that implements committed quality based on a specific application. The network slice generally requires end-to-end slicing. An optical access network (optical access network, OAN) and an optical network terminal (optical network terminal, ONT) in the OAN are used as examples for description below.

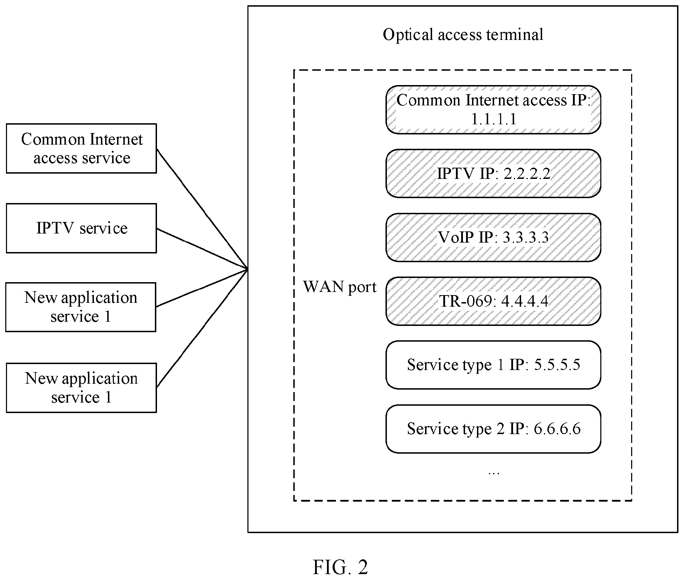

In one aspect, the ONT in the OAN may be considered as an endpoint of the network slice, each independent wide area network (wide area network, WAN) port in the ONT needs to be configured with a different internet protocol (Internet protocol, IP) address, and each independent high-speed WAN port is configured to carry a different type of service, as shown in FIG. 2. The ONT shown in FIG. 2 includes a plurality of WAN ports, and shaded WAN ports indicate WAN ports specified in an existing protocol or standard. For example, a WAN port used for common Internet access is a WAN 1, and an IP address of the WAN 1 is 1.1.1.1; a WAN port used for IPTV is a WAN 2, and an IP address of the WAN 2 is 2.2.2.2; a WAN port used for a voice over Internet protocol (voice over Internet protocol, VoIP) is a WAN 3, and an IP address of the WAN 3 is 3.3.3.3; and a WAN port used for a TR-069 protocol is a WAN 4, and an IP address of the WAN 4 is 4.4.4.4, as shown in FIG. 2. The foregoing four WAN ports may be configured to carry corresponding service data. For example, the WAN 1 is configured to carry a common Internet access service, and the WAN 2 is configured to carry an IPTV service.

When the ONT needs to carry a new application service, the WAN ports specified in the existing protocol or standard cannot be configured to carry the new application service. In this case, a new independent high-speed WAN port needs to be configured in the ONT to carry the new application service. At present, because each independent WAN port corresponding to the ONT needs to be configured with a different IP address, an operator needs to plan a new IP address resource pool and a new virtual local area network (virtual local area network, VLAN) resource for the new application service. However, IP address resource consumption increases continuously, and a layer-3 network becomes more complex. This increases network operation and maintenance costs. It should be noted that the new application service in this embodiment may include but is not limited to a big video service, an online education service, an online game service, an online office service, and the like.

In another aspect, in an initial phase of the new application service, path mapping of the new application service can be determined in a manner of artificial intelligence (artificial intelligence, AI) application identification. However, it is difficult to ensure 100% accurate real-time mapping. Once a packet target IP address becomes invalid, the carried new application service will be interrupted. When the new application service is abnormal, the new application service needs to be switched back to a traditional Internet access WAN port to restore the service. However, when the new application service uses the traditional Internet access WAN port, because an IP address of the new application service is different from an IP address of the traditional Internet access WAN port, a service server considers that a user is changed, and consequently the new application service is interrupted.

To resolve the foregoing problem, embodiments of this application provides a port management method for user access equipment. The method helps reduce IP address resource consumption, reduce IP network complexity, and reduce network operation and maintenance costs.

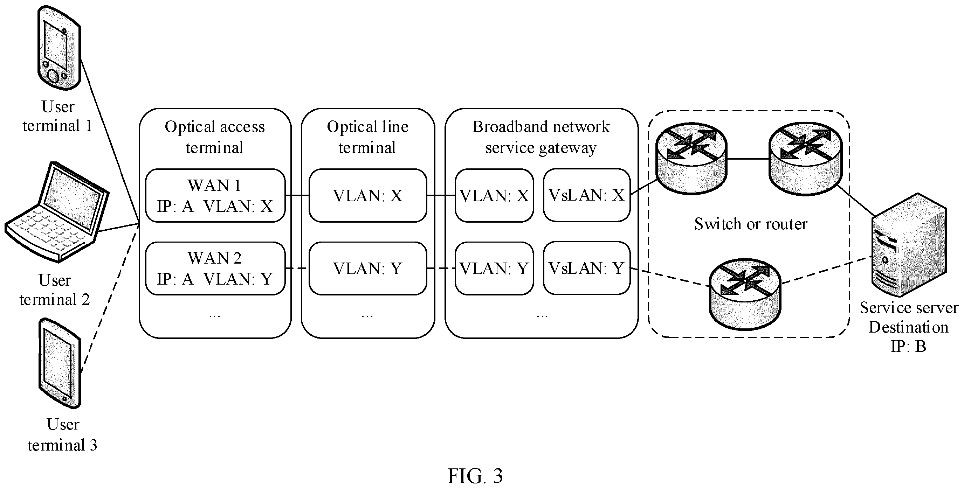

The port management method for the user access equipment provided in embodiments of this application is applied to the following several different network scenarios. FIG. 3 shows a network scenario according to an embodiment of this application. The network scenario includes equipment such as user terminals, an optical network terminal ONT, an optical line terminal OLT, a broadband network service gateway BNG, a switch/router, and a service server. A connection relationship between the equipment is shown in FIG. 3.

The user terminal in FIG. 3 is configured to provide different types of services. For example, as an online education terminal, the user terminal may provide an online education service for a user. The user terminal may include but is not limited to a smartphone (smartphone), a personal computer (personal computer, PC), a tablet computer (pad), a virtual reality (virtual reality, VR) terminal, an augmented reality (augmented reality, AR) terminal, a vehicle, a wireless terminal in industrial control (industrial control), a wireless terminal in self driving (self driving), a wireless terminal in a smart city (smart city), and the like. Each user terminal may be connected to one or more WAN ports of the ONT.

The optical network terminal ONT (used as user access equipment in this embodiment of this application) is an end unit of fiber to the home (fiber to the home, FTTH), and is generally referred to as an "optical modem". The ONT is connected to the user terminals in a downstream direction, and is configured to carry data of the user terminals; and is connected to the OLT in an upstream direction, and is configured to send data of the user terminals to the upper-layer server via the OLT. In this embodiment, the ONT is mainly configured to set the carried data to data packets with a same IP address and different VLANs. In other words, the ONT in this embodiment has a forwarding capability based on the same IP address and different VLANs.

Optionally, the network scenario shown in FIG. 3 may further include an optical network unit (optical network unit, ONU), and the ONU is configured to provide services such as data, an IPTV, and a VoIP. Generally, the ONT is the ONU and is an optical network terminal used as a user end. Strictly, the ONT should be a part of the ONU. A difference between the ONT and the ONU lies in that the ONT is an optical network terminal and is directly located at the user end, but the ONU is an optical network unit, and there may be another network, such as the Ethernet (Ethernet), between the ONU and the user terminal. The ONU can be connected to a gateway device of the Ethernet, and then connected to the user terminal.

The optical line terminal OLT is configured to connect to a fiber backbone, and functions as a switch or a router in a traditional communication network. For example, the OLT may provide functions such as traffic scheduling and buffer control, and provide a user-oriented optical port for a passive optical network and a user-oriented allocated bandwidth. In this embodiment, the OLT is mainly configured to convert an IP address to a VLAN, to implement data forwarding through the VLAN.

The broadband network service gateway BNG is configured to connect the OLT and the switch/router in an upper-layer network, and forward a data packet to the switch/router in the upper-layer network. The switch/router is configured to forward a data packet based on a layer 2/layer 3 protocol. A forwarding path including the switch/router in this embodiment may be sorted based on service type of the forwarded data packet. The service server is configured to provide a downlink transmission service, for example, send downlink service data to a user terminal.

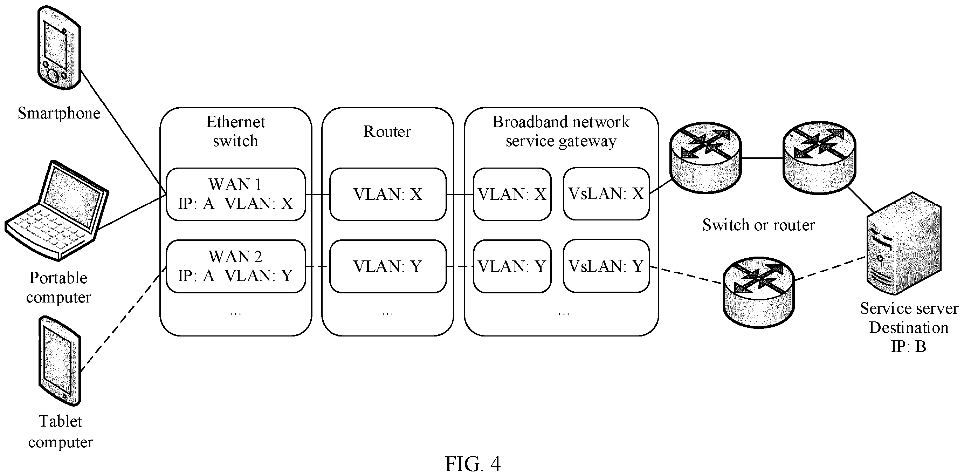

In an example, FIG. 4 shows another network scenario according to an embodiment of this application. The network scenario includes equipment such as user terminals, an Ethernet switch/router, a core network router, and a service server. The Ethernet switch/router (used as user access equipment in this embodiment of this application) in the embodiment in FIG. 4 may implement a function similar to that of the ONT in the embodiment in FIG. 3, that is, the Ethernet switch/router is configured to carry data of the user terminal, and set the carried data to data packets with a same IP address and different VLANs, in other words, has a forwarding capability based on the same IP address and different VLANs. The core network router in the embodiment in FIG. 4 may implement a function similar to that of the OLT in the embodiment in FIG. 3, that is, select a forwarding path based on an IP address.

The following describes in detail the port management method for the user access equipment provided in embodiments of this application.

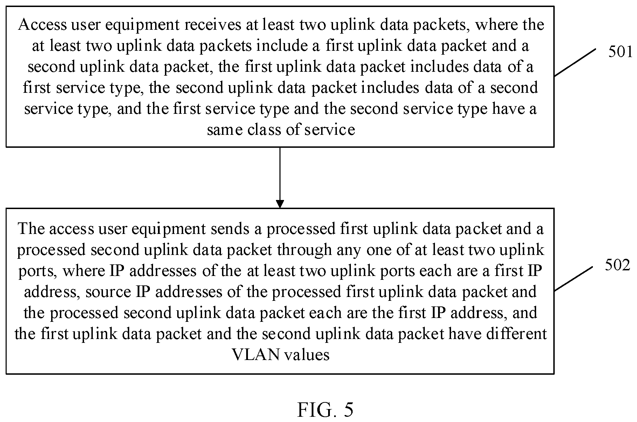

FIG. 5 shows a port management method for user access equipment according to an embodiment of this application. The method is performed by the user access equipment. The user access equipment in this embodiment may include but is not limited to equipment such as an ONT, an Ethernet switch, or a router. The method may specifically include the following steps.

501: The user access equipment receives at least two uplink data packets, where the at least two uplink data packets include a first uplink data packet and a second uplink data packet, the first uplink data packet includes data of a first service type, the second uplink data packet includes data of a second service type, and the first service type and the second service type have a same class of service.

502: The user access equipment sends the processed first uplink data packet and the processed second uplink data packet through any one of at least two uplink ports, where IP addresses of the at least two uplink ports each are a first IP address, source IP addresses of a processed first uplink data packet and a processed second uplink data packet each are the first IP address, and the first uplink data packet and the second uplink data packet have different VLAN values.

The foregoing step 501 and step 502 mainly describe related operations performed by the user access equipment in an uplink transmission scenario (namely, a scenario in which a user terminal sends data to a service server). The user access equipment can receive the at least two uplink data packets, where the at least two uplink data packets include the first uplink data packet and the second uplink data packet. The first uplink data packet includes the data of the first service type, the second uplink data packet includes the data of the second service type, and the first service type and the second service type have the same class of service.

For example, in the network scenario shown in FIG. 3, a user terminal 1 and a user terminal 2 are configured to provide a big video service, and a user terminal 3 is configured to provide an online education service. Both the big video service and the online education service may be considered as services requiring high quality, that is, the big video service and the online education service have a same class of service. The user terminal 1, the user terminal 2, and the user terminal 3 each may send an uplink data packet to the user access equipment. Correspondingly, the user access equipment separately receives at least two uplink data packets from the user terminal 1, the user terminal 2, and the user terminal 3.

Optionally, after receiving the at least two uplink data packets, the user access equipment may determine respective service types of the at least two uplink data packets by using an AI analysis method. For example, if uplink data packets from the user terminal 1 and the user terminal 2 include big video service data, the user access equipment can determine, through AI analysis, that the uplink data packets from the user terminal 1 and the user terminal 2 are the first uplink data packets, and a service type of the first uplink data packets is a big video service type. If an uplink data packet from the user terminal 3 includes online education service data, the user access equipment can determine, through the AI analysis, that the uplink data packet from the user terminal 3 is the second uplink data packet, and a service type of the second uplink data packet is an online education service type.

Optionally, the user access equipment can further determine respective service types of the at least two uplink data packets based on respective destination IP addresses of the at least two uplink data packets. For example, a destination IP address of the uplink data packets from the user terminal 1 and the user terminal 2 is B, and a destination IP address of the uplink data packet from the user terminal 3 is C. The user access equipment determines, based on a destination IP address of each uplink data packet, that the uplink data packets from the user terminal 1 and the user terminal 2 are the first uplink data packets, and that the uplink data packet from the user terminal 3 is the second uplink data packet.

After receiving the at least two uplink data packets, the user access equipment can set source IP addresses of the at least two uplink data packets to a same source IP address (namely, a first IP address), and set VLAN values of the at least two uplink data packets to different VLAN values. In other words, the user access equipment sets source IP addresses of data packets of a same class of service to a same IP address, and sets, based on different service types, data packets of different service types in the same class of service to different VLAN values, and sets the first uplink data packet and the second uplink data packet to different VLAN values. In other words, for an upper-layer network, the data packets of the same class of service can be considered as data packets sent from a same source IP address. The data packets of different types of service in the same class of service are transmitted along different VLAN paths based on respective VLAN values of the data packets.

In an implementation, that the user access equipment processes the at least two received uplink data packets may specifically include the following steps.

The user access equipment receives configuration information sent by a configuration device, where the configuration information includes the first IP address and the VLAN values;
the user access equipment sets the source IP addresses of the first uplink data packet and the second uplink data packet to the first IP address; and
the user access equipment sets the VLAN values of the first uplink data packet and the second uplink data packet to different VLAN values.

After receiving the at least two uplink data packets, the user access equipment may describe a configuration requirement based on data of different service types included in the at least two uplink data packets. For example, the user access equipment may send a configuration request message to the configuration device, where the configuration request message requests to separately allocate a same IP address and different VLAN values to data of different service types. The configuration request message sent by the user access equipment in this embodiment may include but is not limited to a dynamic host configuration protocol (dynamic host configuration protocol, DHCP) message, a NETCONF protocol message, a message queuing telemetry transport (message queuing telemetry transport, MQTT) protocol message, a simple network management protocol (simple network management protocol, SNMP) message, an optical network unit management control interface (ONU management and control interface, OMCI) message, a TR-069 protocol message, and the like.

The configuration device generates configuration information based on the configuration request message sent by the user access equipment. The configuration information includes a first IP address and a VLAN value of a first port. The first port is a default port for accessing the Internet in the user access equipment. For example, the first port is a WAN 1 in FIG. 3. The configuration device sends the configuration information to the user access equipment. Correspondingly, the user access equipment receives the configuration information and obtains the first IP address and the VLAN value of the first port.

The user access equipment sets the source IP addresses of the at least two uplink data packets to the first IP address based on the configuration information, and sets the VLAN values of the at least two uplink data packets to different VLAN values. In other words, the user access equipment sets source IP addresses of data packets of a same class of service to the first IP address, and sets VLAN values of data packets of different service types to different VLAN values based on different service types in the same class of service.

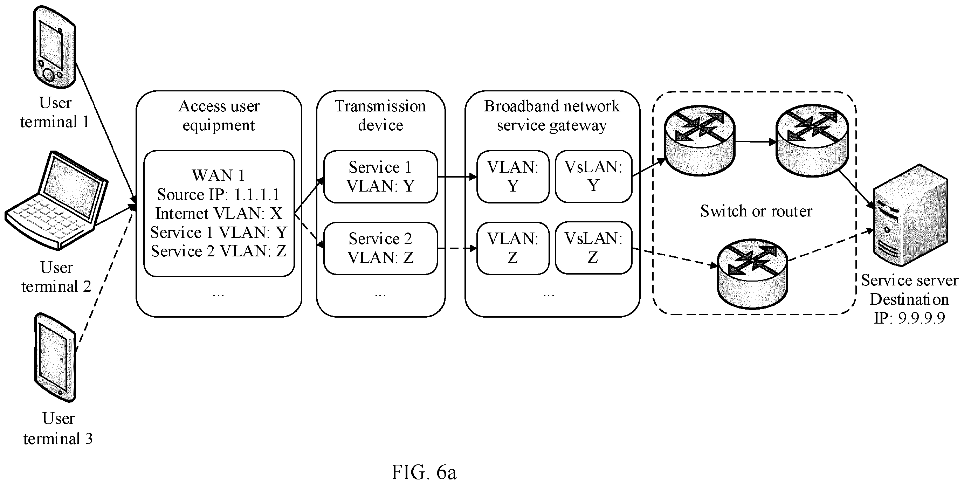

For example, the user access equipment includes an uplink port WAN 1, a first IP address is 1.1.1.1, and a VLAN value of an Internet access service data packet is VLAN X. Destination IP addresses of uplink data packets from the user terminal 1, the user terminal 2, and the user terminal 3 are 9.9.9.9. The first uplink data packets from the user terminal 1 and the user terminal 2 include the big video service data. The user access equipment may set source IP addresses of the first uplink data packets from the user terminal 1 and the user terminal 2 to 1.1.1.1, and set VLAN values of the first uplink data packets from the user terminal 1 and the user terminal 2 to VLAN Y The second uplink data packet from the user terminal 3 includes the online education service data, and the user access equipment may set a source IP address of the second uplink data packet from the user terminal 3 to 1.1.1.1, and set a VLAN value of the second uplink data packet from the user terminal 3 to VLAN Z, as shown in FIG. 6a. A service 1 in FIG. 6a indicates a big video service, and a service 2 indicates an online education service. It should be noted that the Internet VLAN X indicates a VLAN used by a traditional Internet service, and the traditional Internet service is different from a new application service in this embodiment, that is, the two services are transmitted through different VLANs.

It should be noted that the user access equipment sets the source IP addresses of the at least two data packets to the same IP address may also be understood as that the user access equipment sets IP addresses of different uplink ports to a same IP address, sets VLAN values corresponding to different uplink ports to different VLAN values, and sends data packets of different service types in a same class of service to an upper-layer network through different uplink ports.

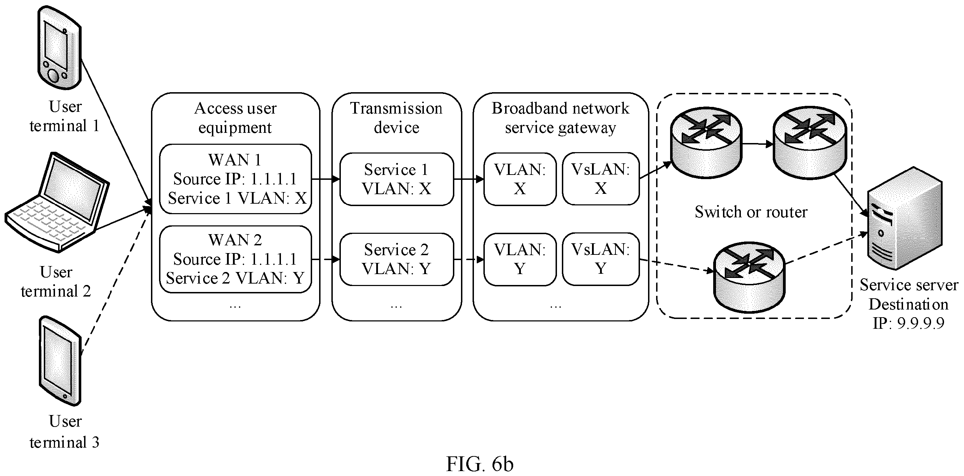

For example, the user access equipment includes two different uplink ports: a WAN 1 and a WAN 2, and a first IP address is 1.1.1.1. Destination IP addresses of uplink data packets from the user terminal 1, the user terminal 2, and the user terminal 3 are 9.9.9.9. First uplink data packets from the user terminal 1 and the user terminal 2 include online game service data, and a second uplink data packet from the user terminal 3 includes online office service data. The first uplink data packets and the second uplink data packet are uplink data packets of different service types in a same class of service. The user access equipment sets IP addresses of the WAN 1 and the WAN 2 to the same IP address 1.1.1.1, sets a VLAN value of the WAN 1 to VLAN X, and sets a VLAN value of the WAN 2 to VLAN Y, as shown in FIG. 6b. Based on the foregoing port configuration, in FIG. 6b, the WAN 1 is connected to VLAN X, that is, the WAN 1 belonging to VLAN X is configured to transmit the first uplink data packets from the user terminal 1 and the user terminal 2; and in FIG. 6b, the WAN 2 is connected to VLAN Y, that is, the WAN 2 belonging to VLAN Y is configured to transmit the uplink data packet from the user terminal 3.

Optionally, the user access equipment receives the configuration information sent by the configuration device, where the configuration information further includes one or more VLAN values. In other words, the configuration device may directly configure a VLAN value for a newly created port of the user access equipment. For example, the configuration device in this embodiment may reconstruct an IP address resource pool, and associate a same IP address with different VLAN values, as shown in Table 1. An IP address resource pool of the configuration device may be represented by using a list (as shown in Table 1). In a reconstructed IP address resource list, one IP address corresponds to one or more VLAN values. Therefore, the configuration information sent by the configuration device to the user access equipment may include any row in Table 1, that is, include an IP address and one or more VLANs associated with the IP address.

**Table 1 Reconstructed IP address resource list in the configuration device**

| Number | IP address | VLAN value |
|---|---|---|
| 1 | 1.1.1.1 | VLAN X |
| | | VLAN Y |
| | | VLAN Z |
| 2 | 2.2.2.2 | VLAN M |
| | | VLAN N |
| ... | ... | ... |

It can be seen that the reconstructed IP address resource list in the configuration device includes the VLAN value associated with each IP address. When the user access equipment sends a configuration request message to the configuration device, the configuration device may query the IP address resource list based on the configuration request message, and directly send an IP address requested for configuration and a VLAN value associated with the IP address to the user access equipment.

In an implementation, that the user access equipment processes the at least two received uplink data packets may specifically include the following steps.

The user access equipment sets IP addresses of any two uplink ports as a first IP address of a default port, and set respective VLAN values of a first uplink port and a second uplink port in the any two uplink ports to different VLAN values;
the user access equipment sets source IP addresses of the at least two uplink data packets to the first IP address; and
the user access equipment sets a first VLAN value of the first uplink data packet to a VLAN value of the first uplink port, and sets a second VLAN value of the second uplink data packet to a VLAN value of the second uplink port.

The user access equipment may parse the at least two received uplink data packets to obtain data included in the first uplink data packet and data included in the second uplink data packet. The data included in the first uplink data packet and the data included in the second uplink data packet is data in a same class of service, and may be data of different service types. The user access equipment needs to create a new uplink port to transmit the at least two uplink data packets. Specifically, the user access equipment creates the first uplink port and the second uplink port, sets the IP addresses of the first uplink port and the second uplink port as the first IP address of the default port, and sets the VLAN values of the first uplink port and the second uplink port to different VLAN values, where the VLAN values of the first uplink port, the second uplink port, and the default port are different.

For example, the user access equipment includes a default port WAN 1, a first uplink port WAN 2, and a second uplink port WAN 3, and the first IP address is 1.1.1.1. Destination IP addresses of uplink data packets from the user terminal 1, the user terminal 2, and the user terminal 3 are 9.9.9.9. An uplink data packet from the user terminal 1 includes traditional Internet service data, an uplink data packet from the user terminal 2 includes big video service data, and an uplink data packet from the user terminal 3 includes online office service data. The user access equipment receives the at least two uplink data packets from the user terminal 1, the user terminal 2, and the user terminal 3, and determines that data in the at least two uplink data packets is new application service data in a same class of service, and is new application service data of two service types. The user access equipment is configured with two new uplink ports, which are separately configured to transmit the new application service data of two service types.

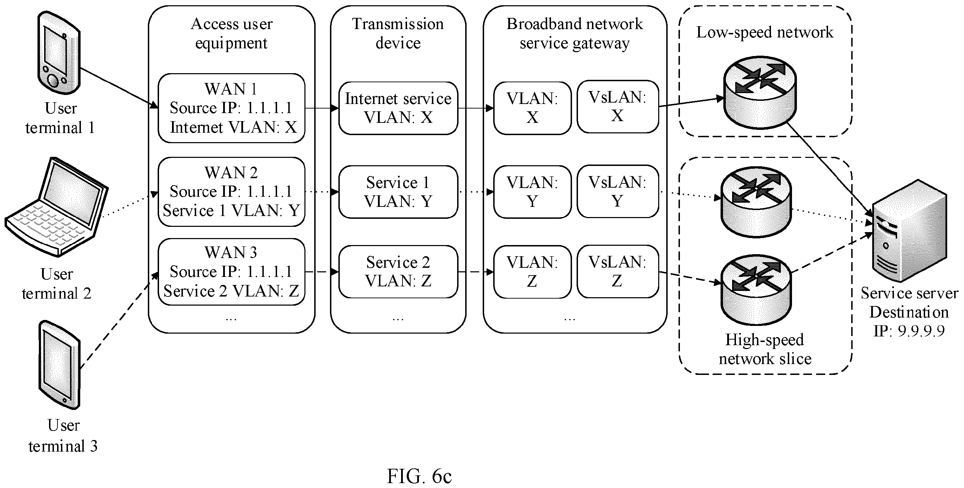

With reference to FIG. 6c, in a network scenario shown in FIG. 6c, a WAN 1 indicates a default port, an IP address is 1.1.1.1, and a VLAN value is VLAN X. The WAN 1 is configured to transmit the uplink data packet from the user terminal 1. The user access equipment may set a source IP address of the uplink data packet from the user terminal 1 to the IP address of the WAN 1, and set a VLAN value of the uplink data packet from the user terminal 1 to the VLAN value of the WAN 1, that is, the IP address of the uplink data packet from the user terminal 1 is 1.1.1.1, and the VLAN value from the user terminal 1 is VLAN X.

The user access equipment creates two different uplink ports: a first uplink port WAN 2 and a second uplink port WAN 3, and the two different uplink ports are respectively configured to transmit the first uplink data packet from the user terminal 2 and the second uplink data packet from the user terminal 3, as shown in FIG. 6c. A specific implementation of creating two different uplink ports by the user access equipment may be that the user access equipment duplicates an IP address of a WAN port (namely, the WAN 1) of the Internet, and sets IP addresses of the WAN 2 and the WAN 3 each to 1.1.1.1. The user access equipment allocates different VLANs to two different uplink ports separately. For example, a VLAN value of the WAN 2 is set to VLAN Y, and a VLAN value of the WAN 3 is set to VLAN Z, that is, VLAN values of the WAN 1, the WAN 2, and the WAN 3 are different.

In other words, the user access equipment may set a source IP address of the first uplink data packet from the user terminal 2 to a first IP address, and set a VLAN value of the first uplink data packet from the user terminal 2 to the VLAN value of the WAN 2. The user access equipment may set a source IP address of the second uplink data packet from the user terminal 3 to the first IP address, and set a VLAN value of the second uplink data packet from the user terminal 3 to the VLAN value of the WAN 3. For example, in the network scenario shown in FIG. 6c, an IP address of the first uplink data packet from the user terminal 2 is 1.1.1.1, and the VLAN value is VLAN Y; and an IP address of the second uplink data packet from the user terminal 3 is 1.1.1.1, and the VLAN value is VLAN Z. For a new application service, the VLAN (for example, VLAN Y and VLAN Z in FIG. 6c) for transmitting new application service data may be considered as a high-speed WAN network slice.

Optionally, in the network scenarios shown in FIG. 6b and FIG. 6c, if a network slice of any one (the WAN 2 shown in FIG. 6b) of the at least two uplink ports or any two (the WAN 2 and the WAN 3 shown in FIG. 6c) of the at least two uplink ports is interrupted, at least two uplink data packets transmitted through the at least two uplink ports need to be switched back to a backup port (the WAN 1 shown in FIG. 6b and the WAN 1 shown in FIG. 6c) for data transmission. Because IP addresses of the at least two uplink ports are the same as a first IP address of the default port, the service server does not detect that a service of the default port is abnormal during service switchback, and the services is not interrupted. In other words, the user access equipment sets an IP address of the new WAN port to be the same as an IP address of the traditional WAN port. When the new WAN port is faulty, the traditional WAN port may be used as a backup of the new WAN port, that is, the service is switched back to the traditional WAN port to recover the service, and the service is not interrupted during the switchback. This helps ensure QoS of the network.

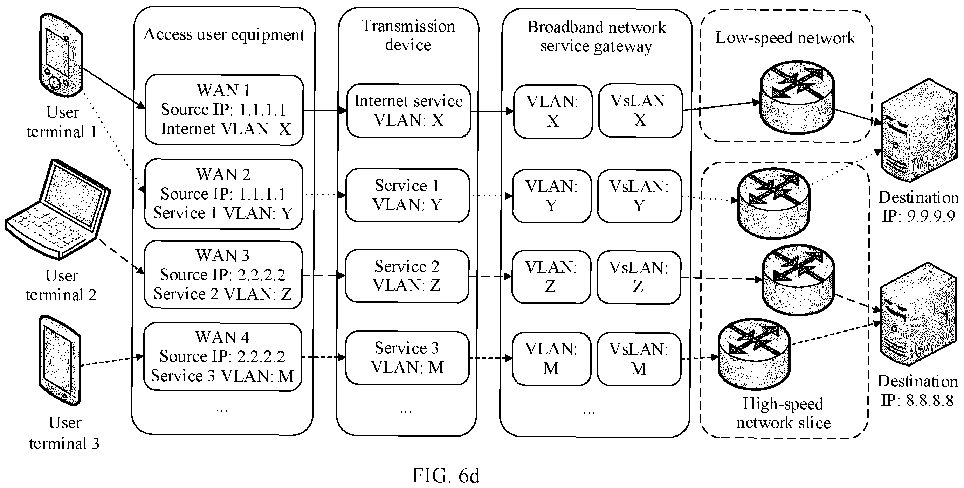

Optionally, FIG. 6d shows yet another network scenario according to this embodiment of this application. In the network scenario, an IP address of a WAN 1 of the user access equipment is 1.1.1.1, a VLAN value is VLAN X, and the WAN 1 is configured to transmit a traditional Internet access service. It is assumed that a destination IP address of an uplink data packet from the user terminal 1 is 9.9.9.9, and destination IP addresses of uplink data packets from the user terminal 2 and the user terminal 3 are 8.8.8.8. The uplink data packet from the user terminal 1 includes traditional Internet service data and online game service data, an uplink data packet from the user terminal 2 includes online education service data, and an uplink data packet from the user terminal 3 includes online office service data. It may be understood that an online education service and an online office service have a similar requirement for a transmission resource. For example, both the online education service and the online office service require a transmission resource with high bandwidth.

The user access equipment can create a plurality of WAN ports for the four different types of services to transmit data of different service types in a same class of service. Compared with that in the WAN port configuration in the embodiments in FIG. 6a to FIG. 6c, an IP address of a new WAN port in FIG. 6d may be the same as the IP address of the WAN 1, or may be different from the IP address of the WAN 1.

For example, in FIG. 6d, an IP address of a WAN 2 is the same as the IP address of the WAN 1, and a VLAN value of the WAN 2 is different from the VLAN value of the WAN 1. That is, the IP address of the WAN 2 is set to 1.1.1.1, and the VLAN value of the WAN 2 is set to VLAN Y. The user access equipment sends the online game service data to the destination IP address 9.9.9.9 through the WAN 2. IP addresses of a WAN 3 and a WAN 4 are different from the IP address of the WAN 1, the IP addresses of the WAN 3 and the WAN 4 are the same, and VLAN values of the WAN 3 and the WAN 4 are different. For example, an IP address of the WAN 3 is set to 2.2.2.2, and a VLAN value of the WAN 3 is set to VLAN M, and the user access equipment sends the online education service data to the destination IP address 8.8.8.8 through the WAN 3; and an IP address of the WAN 4 is set to 2.2.2.2, and a VLAN value of the WAN 4 is set to VLAN N, and the user access equipment sends the online office service data to the destination IP address 8.8.8.8 through the WAN 4.

It can be learned that, based on a WAN port configuration in the ONT shown in FIG. 6d, when a slice network of the WAN 2 is interrupted, because the IP address of the WAN 2 is the same as the IP address of the WAN 1, a service originally carried by the WAN 2 may be switched to the WAN 1 to recover service transmission, that is, the WAN 1 may be used as a backup channel of the WAN 2. Similarly, when a slice network of the WAN 3 is interrupted, because the IP address of the WAN 3 is the same as the IP address of the WAN 4, a service originally carried by the WAN 3 may be switched to the WAN 4 to recover service transmission, that is, the WAN 4 may be used as a backup channel of the WAN 3. In this case, Although the WAN port configuration in FIG. 6d increases an amount of used IP addresses compared with the WAN port configuration in the embodiments of FIG. 6a to FIG. 6c, the WAN port configuration in FIG. 6d still uses fewer IP addresses than a solution in which each WAN port is configured with a different IP address. In addition, because service features of services carried by the WAN 3 and the WAN 4 in FIG. 6d are similar, and transmission features of slice networks corresponding to the services are also similar (for example, both can provide high-bandwidth transmission), when the service carried by the WAN 3 is switched to the WAN 4 to recover service transmission, a service QoS requirement can be ensured.

After the user access equipment sets the source IP addresses of the at least two uplink data packets to the same IP address and sets the VLAN values to different VLAN values, the user access equipment may send the at least two uplink data packets through any two of the at least two uplink ports having the same IP address.

In an implementation, a forwarding policy may be configured inside the user access equipment. The forwarding policy is used to indicate the user access equipment to transmit the received at least two uplink data packets to the destination IP address through different paths. In this embodiment, the forwarding policy combines matching of the destination IP address and matching of the VLAN value, to determine forwarding paths of the at least two uplink data packets.

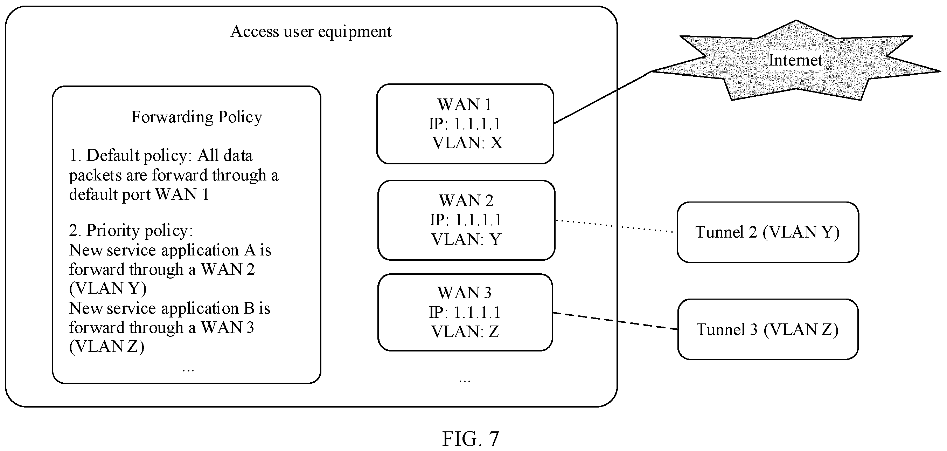

For example, FIG. 7 is a schematic diagram of data forwarding based on a same IP address and different VLANs according to this embodiment of this application. For the at least two uplink data packets received by the user access equipment, the user access equipment can parse to obtain an IP packet in each data packet. If a destination IP address in a data packet is different from an IP address of the service server, the data packet is sent through a default port (for example, a WAN 1 in FIG. 7) and is transmitted to an Internet server through a default low-speed network; or if a destination IP address in a data packet is the same as an IP address of the service server, the user access equipment selects, based on the forwarding policy inside the user access equipment, a specified port (for example, a WAN 2 in FIG. 7) for forwarding the data packet. The user access equipment sets a VLAN of the data packet to a VLAN value of the specified port (for example, a VLAN value of the WAN 2), and replaces a source IP address of the data packet with an IP address of the specified port (for example, an IP address of the WAN 2), as shown in FIG. 7. After setting the data packet, the user access equipment may send the data packet through the specified port. The VLAN value in the sent data packet is used to indicate the data packet to select a corresponding VLAN for transmission to the destination IP address.

Optionally, if the specified port in the user access equipment is faulty (for example, the WAN 2 in FIG. 7 is faulty), according to the forwarding policy, the data packet originally sent through the specified port may be preferentially sent through the default port (for example, the WAN 1 in FIG. 7). An IP address of the default port is the same as the IP address of the specified port. The user access equipment sets the VLAN of the data packet to a VLAN value of the default port, and replaces the source IP address of the data packet with an IP address of the default port, as shown in FIG. 7. In other words, the source IP address of the data packet is actually the same as the IP address of the specified port before the fault occurs.

In an implementation, that the user access equipment sends at least two processed uplink data packets through any two of the at least two uplink ports may specifically include the following steps.

The user access equipment sends a first uplink data packet through a first uplink port in the any two uplink ports, and sends the second uplink data packet through a second uplink port in the any two uplink ports, where the first uplink port and the second uplink port have a same IP address and different VLAN values.

When the user access equipment sends the at least two uplink data packets to a same destination IP address, because the destination IP addresses are the same, the user access equipment selects, according to the forwarding policy, and based on the VLAN value in each data packet, different VLANs to forward uplink data packets of different service types in a same class of service.

For example, in the network scenario shown in FIG. 6a, the user access equipment sets the WAN 1 to one IP address and a plurality of VLAN values. If destination IP addresses of uplink data packets of different service types in a same class of service are the same and are the same as the destination IP address of the service server, the user access equipment determines, based on the destination IP address and a first VLAN value of the first uplink data packet, that the first uplink data packet is forwarded through a port set to the first VLAN value; and the user access equipment determines, based on the destination IP address and a second VLAN value of the second uplink data packet, that the second uplink data packet is forwarded through a port set to the second VLAN value. In other words, the user access equipment sets the source IP addresses of the first uplink data packet and the second uplink data packet to the IP address of the WAN 1, and sets the VLAN values of the at least two uplink data packets to the plurality of VLAN values of the WAN 1. The at least two uplink data packets sent from the WAN 1 are sent to the destination IP address by using VLAN Y and VLAN Z.

For another example, in the network scenario shown in FIG. 6b, the user access equipment sets the WAN 1 and the WAN 2 to a same IP address and different VLAN values. The user access equipment sets the IP address of the first uplink data packet to the IP address of the WAN 1, sets the VLAN value to the VLAN value of the WAN 1, and sends the first uplink data packet through the WAN 1 and transmits the first uplink data packet to the destination IP address by using VLAN X. Similarly, the user access equipment sets the IP address of the second uplink data packet to the IP address of the WAN 2, sets the VLAN value to the VLAN value of the WAN 2, and sends the second uplink data packet through the WAN 2 and transmits the second uplink data packet to the destination IP address by using VLAN X. In FIG. 6a and FIG. 6b, the at least two uplink data packets are sent to the same destination IP address.

When sending the at least two uplink data packets to different destination IP addresses, the user access equipment may determine, based on a routing table, forwarding respective ports of the first uplink data packet and the second uplink data packet. Specifically, the following cases may be included: Destination IP addresses of at least two different service types in a same class of service are different, or destination IP addresses of at least two different service types are the same and destination IP addresses of at least two different service types are different in a same class of service.

For example, in the network scenario shown in FIG. 6d, the user access equipment sets the WAN 1 and the WAN 2 to a same IP address and different VLAN values. The at least two uplink data packets sent from the WAN 1 and the WAN 2 are respectively transmitted to the same destination IP address 9.9.9.9 by using VLAN X and VLAN Y The user access equipment sets the WAN 3 and the WAN 4 to a same IP address and different VLAN values, and WAN 3 and WAN 1 have different IP addresses. The at least two uplink data packets sent from the WAN 3 and the WAN 4 are respectively transmitted to the same destination IP address 8.8.8.8 by using VLAN Z and VLAN M. In other words, when destination IP addresses of at least two different service types are different, the user access equipment may set WAN ports with different IP addresses, and the WAN ports are separately configured to transmit service data of different destination IP addresses.

It can be learned that, in an uplink transmission scenario (a scenario in which a terminal transmits data to a service server), the user access equipment can receive at least two uplink data packets of a same class of service, and set source IP addresses of the at least two uplink data packets to a same source IP address. The user access equipment may further set the VLAN values of the first uplink data packet and the second uplink data packet to different VLAN values, that is, distinguish the first uplink data packet and the second uplink data packet of different service types at the same class of service based on different VLANs. Based on the foregoing settings of the first uplink data packet and the second uplink data packet, the user access equipment sends the processed first uplink data packet and the processed second uplink data packet through the any one of the at least two uplink ports. This helps reduce IP address resource consumption, reduce IP network complexity, and reduce network operation and maintenance costs.

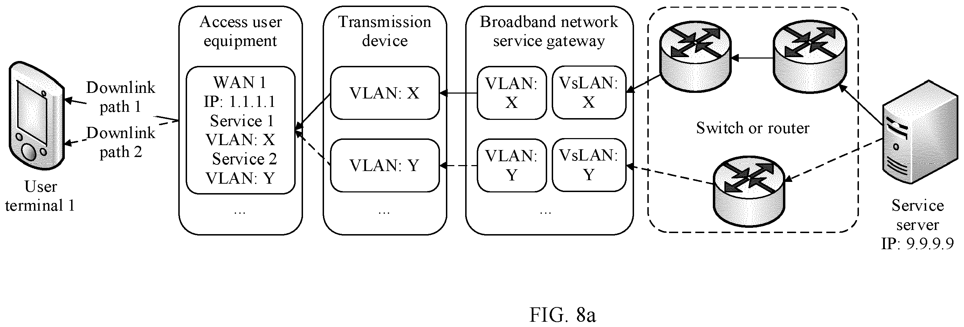

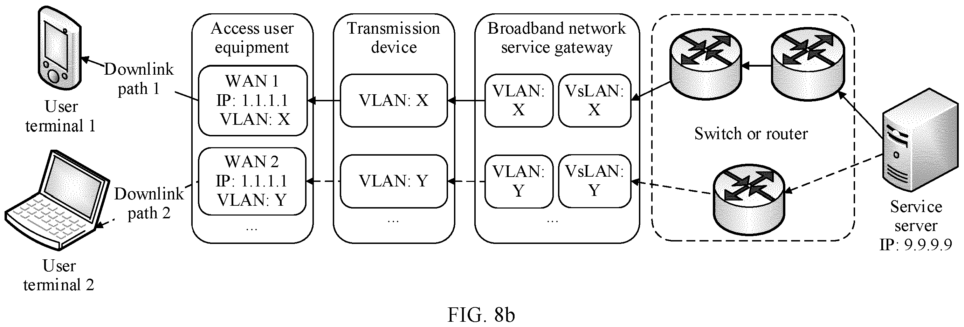

In an example, for a downlink transmission scenario (namely, a scenario in which the service server sends data to the user terminal), embodiments shown in FIG. 8a and FIG. 8b describe in detail related operations performed by the user access equipment in the downlink transmission scenario. The user access equipment can receive at least two downlink data packets, and the at least two downlink data packets include data of different service types in a same class of service.

Specifically, that the user access equipment receives the at least two downlink data packets through at least two uplink ports may specifically include the following two cases:
Case 1: The user access equipment receives the at least two downlink data packets through any one of the at least two uplink ports, where the at least two uplink ports have a same IP address and different VLAN values, the at least two downlink data packets include a first downlink data packet and a second downlink data packet, the first downlink data packet includes data of a first service type, the second downlink data packet includes data of a second service type, the first service type and the second service type have a same class of service, and fields in the at least two downlink data packets include a same destination IP address and different VLAN values.

In Case 1, because the fields in the at least two downlink data packets include the same destination IP address, that is, the first downlink data packet and the second downlink data packet have the same destination IP address. The destination IP addresses of the first downlink data packet and the second downlink data packet are IP addresses of the uplink port that receives the first downlink data packet and the second downlink data packet. The user access equipment can receive the first downlink data packet and the second downlink data packet through the uplink port.

For example, in a network scenario shown in FIG. 8a, an IP address of the service server is 9.9.9.9. The service server sets source IP addresses of at least two to-be-sent downlink data packets to the IP address 9.9.9.9 of the service server, and sets destination IP address to a first IP address 1.1.1.1. The any one of the at least two uplink ports in the user access equipment is a WAN 1 in FIG. 8a, and an IP address of the WAN 1 is the first IP address 1.1.1.1. The service server sends the first downlink data packet and the second downlink data packet to the user access equipment by using a switch, a router, a transmission device, or the like. Correspondingly, the user access equipment receives the first downlink data packet and the second downlink data packet through the WAN 1 according to a routing policy.

Case 2: The user access equipment receives the at least two downlink data packets through any two of the at least two uplink ports, where the user access equipment receives a first downlink data packet through a first uplink port belonging to a first VLAN, and receives a second downlink data packet through a second uplink port belonging to a second VLAN.

In Case 2, the user access equipment receives data of different service types in a same class of service separately through the any two of the at least two uplink ports. The user access equipment sets the first uplink port and the second uplink port to a same IP address, and distinguishes different first uplink port and second uplink port based on different VLAN values. Because the IP addresses of the at least two uplink ports are the same, at least two downlink data packets with a same destination IP address can be received through the at least two uplink ports.

For example, in a network scenario shown in FIG. 8b, the user access equipment sets IP addresses of a WAN 1 and a WAN 2 each to a first IP address 1.1.1.1, sets a VLAN value of the WAN 1 to VLAN X, and sets a VLAN value of the WAN 2 to VLAN Y. The service server sets source IP addresses of at least two to-be-sent downlink data packets to an IP address 9.9.9.9 of the service server, and sets destination IP addresses of the at least two downlink data packets to 1.1.1.1. According to a routing policy, the user access equipment can receive the first downlink data packet through the WAN 1 belonging to VLAN X, and receive the second downlink data packet through the WAN 2 belonging to VLAN Y

The user access equipment parses the received first downlink data packet and the received second downlink data packet to obtain different VLAN values included in fields in the first downlink data packet and the second downlink data packet. The user access equipment may further send, based on different VLAN values, the at least two downlink data packets to a terminal through different downlink paths. Specifically, the user access equipment may send, based on different VLAN values, at least two downlink data packets to a same terminal through different downlink paths; or send at least two downlink data packets to different terminals through different downlink paths.

For example, in the network scenario shown in FIG. 8a, the user access equipment parses the at least two downlink data packets received by the WAN 1, to obtain a VLAN value of each data packet. A VLAN value of the first downlink data packet in the at least two downlink data packets is VLAN Y, and a VLAN value of the second downlink data packet is VLAN Z. VLAN Y corresponds to a downlink path 1, and VLAN Z corresponds to a downlink path 2. The user access equipment may send the first downlink data packet to the user terminal 1 through the downlink path 1, and send the second downlink data packet to the user terminal 1 through the downlink path 2.

For another example, in the network scenario shown in FIG. 8b, the user access equipment parses the at least two downlink data packets received by the WAN 1 and the WAN 2, to obtain a VLAN value of each data packet. The WAN 1 receives the first downlink data packet, and a VLAN value of the first downlink data packet is VLAN X. The user access equipment may send the first downlink data packet to the user terminal 1 through the downlink path 1. The WAN 2 receives the second downlink data packet, and a VLAN value of the second downlink data packet is VLAN Y. The user access equipment may send the second downlink data packet to the user terminal 2 through the downlink path 2.

It can be learned that, in the downlink transmission scenario (a scenario in which the service server transmits data to the terminal), the user access equipment can receive, through the any two uplink ports, at least two downlink data packets of a same class of service. The fields in the at least two downlink data packets include a same IP address and different VLAN values, that is, the first downlink data packet and the second downlink data packet are downlink data packets of different service types, and the first downlink data packet and the second downlink data packet of different service types may be distinguished based on different VLAN values.

In conclusion, embodiments of this application provide the port management method for the user access equipment. The user access equipment can receive the at least two uplink data packets, where the at least two uplink data packets include the first uplink data packet and the second uplink data packet, the first uplink data packet includes the data of the first service type, the second uplink data packet includes the data of the second service type, and the first service type and the second service type have the same class of service. The user access equipment sends the processed first uplink data packet or the processed second uplink data packet through any one of the at least two uplink ports, where the IP addresses of the at least two uplink ports each are the first IP address, the source IP addresses of the processed first uplink data packet and the processed second uplink data packet each are the first IP address, and the first uplink data packet and the second uplink data packet have different VLAN values. It can be learned that, in the uplink transmission scenario, the user access equipment sets data packets of a same class of service to a same IP address, and sets data packets of different service types in a same class of service to different VLAN values. This can implement uplink data transmission based on different VLANs, and help reduce IP address resource consumption.

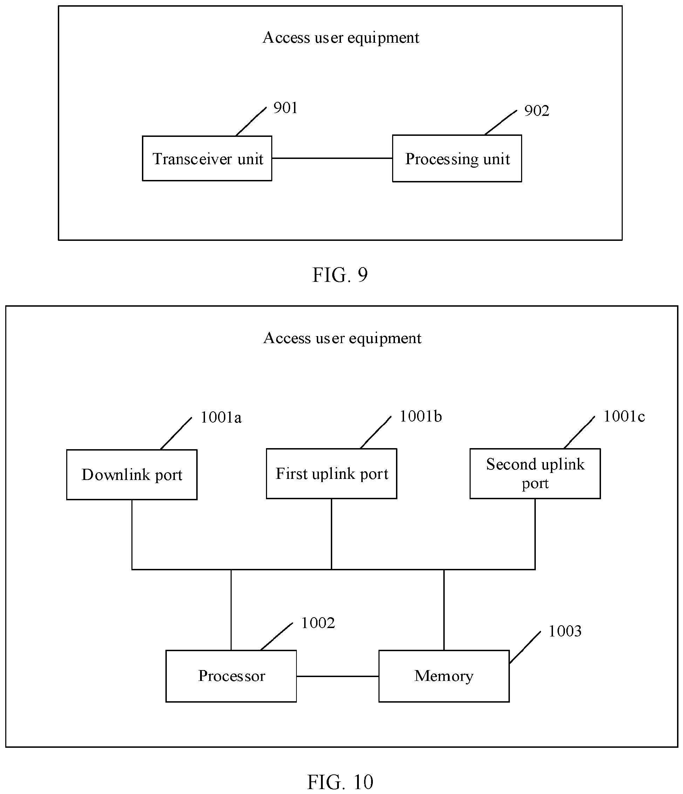

The foregoing describes in detail the port management method for the user access equipment in embodiments of this application with reference to FIG. 1 to FIG. 8b. The following describes in detail user access equipment in embodiments of this application with reference to FIG. 9 and FIG. 10. It should be understood that the user access equipment shown in FIG. 9 and FIG. 10 can implement one or more steps in the port management methods shown in FIG. 5 to FIG. 8b. To avoid repetition, details are not described herein again.

FIG. 9 is a schematic diagram of a structure of user access equipment according to an embodiment of this application. The user access equipment shown in FIG. 9 is configured to implement the methods performed by the user access equipment in the embodiments shown in FIG. 5 to FIG. 8b, and includes a transceiver unit 901 and a processing unit 902.

The transceiver unit 901 is configured to receive at least two uplink data packets, where the at least two uplink data packets include a first uplink data packet and a second uplink data packet, the first uplink data packet includes data of a first service type, the second uplink data packet includes data of a second service type, and the first service type and the second service type have a same class of service. The transceiver unit 901 includes at least two uplink ports, and IP addresses of the at least two uplink ports each are a first IP address. The processing unit 902 is configured to set source IP addresses of the first uplink data packet and the second uplink data packet each to the first IP address, and set VLAN values of the first uplink data packet and the second uplink data packet to different VLAN values. The transceiver unit 901 is further configured to send a processed first uplink data packet or a processed second uplink data packet through any one of the at least two uplink ports.

In an implementation, the transceiver unit 901 is further configured to send at least two processed uplink data packets through any two different uplink ports in the at least two uplink ports.

In an implementation, the processing unit 902 is further configured to determine that a service type of the first uplink data packet in the at least two uplink data packets is the first service type, and a service type of the second uplink data packet is the second service type.

In an implementation, the processing unit 902 is further configured to:
set source IP addresses of the first uplink data packet and the second uplink data packet to a first IP address of a first port; and
set VLAN values of the first uplink data packet and the second uplink data packet to different VLAN values.

In an implementation, that the transceiver unit 901 is configured to send the at least two processed uplink data packets through any two different uplink ports in the at least two uplink ports includes:
A first uplink port in any two uplink ports is configured to send the first uplink data packet, a second uplink port in the any two uplink ports is configured to send the second uplink data packet, and the first uplink port and the second uplink port have a same IP address and different VLAN values.

In an implementation, the first uplink data packet and the second uplink data packet have a same destination IP address, the first uplink data packet is sent from the first uplink port belonging to a first VLAN, and the second uplink data packet is sent from the second uplink port belonging to a second VLAN.

In an implementation, the first uplink data packet and the second uplink data packet have different destination IP addresses, and the first uplink data packet and the second uplink data packet are sent from the any two different uplink ports.

In an implementation, the transceiver unit 901 is further configured to receive at least two downlink data packets through the at least two uplink ports, where any two uplink ports have a same IP address and different VLAN values, the at least two downlink data packets include a first downlink data packet and a second downlink data packet, the first downlink data packet includes data of the first service type, the second downlink data packet includes data of the second service type, and fields in the at least two downlink data packets include the same destination IP address and different VLAN values.

The transceiver unit 901 is further configured to send the at least two downlink data packets to a terminal through different downlink paths.

In an implementation, that the transceiver unit 901 is further configured to receive at least two downlink data packets through the at least two uplink ports includes:
A first uplink port that belongs to a first VLAN and that is in the at least two uplink ports is configured to receive the first downlink data packet, and a second uplink port that belongs to a second VLAN and that is in the at least two uplink ports is configured to receive the second downlink data packet.

It should be noted that the transceiver unit 901 in this embodiment does not specially mean a unit, but means a set of transceiver unit in an uplink transmission scenario and a transceiver unit in a downlink transmission scenario. In another implementation, the user access equipment in this embodiment may mean only user access equipment in the uplink transmission scenario. That is, the transceiver unit in the uplink transmission scenario includes a downlink port configured to receive at least two uplink data packets and at least two uplink ports configured to send the at least two uplink data packets; or the user access equipment in this embodiment may also be user access equipment in the downlink transmission scenario. That is, the transceiver unit in the downlink transmission scenario includes at least two uplink ports configured to receive at least two downlink data packets and a downlink port configured to send the at least two downlink data packets.

In an implementation, related functions implemented by the units in FIG. 9 may be implemented through a port and a processor. FIG. 10 is a schematic diagram of a structure of user access equipment according to an embodiment of this application. The user access equipment may be equipment (for example, a chip) that has a port management function in the embodiments shown in FIG. 5 to FIG. 8b. The user access equipment may include a plurality of ports 1001a to 1001c, at least one processor 1002, and a memory 1003. The plurality of ports 1001a to 1001c, the processor 1002, and the memory 1003 may be connected to each other through one or more communication buses, or may be connected in another manner.

The plurality of ports 1001a to 1001c may be configured to send data or receive data. For example, a downlink port 1001a is configured to receive at least two uplink data packets, and any two uplink ports 1001b and 1001c in the at least two uplink ports are configured to send at least two processed uplink data packets.

The processor 1002 may be configured to process data of the user access equipment, for example, set source IP addresses of the at least two uplink data packets to a same IP address and different VLAN values. The processor 1002 may include one or more processors. For example, the processor 1002 may be one or more central processing units (central processing units, CPUs), one or more network processors (network processors, NPs), one or more hardware chips, or any combination thereof. When the processor 1002 includes one CPU, the CPU may be a single-core CPU, or may be a multi-core CPU.

The memory 1003 is configured to store program code and the like. The memory 1003 may include a volatile memory (volatile memory), for example, a random access memory (random access memory, RAM). Alternatively, the memory 1003 may include a non-volatile memory (non-volatile memory), for example, a read-only memory (read-only memory, ROM), a flash memory (flash memory), a hard disk drive (hard disk drive, HDD), or a solid-state drive (solid-state drive, SSD). Alternatively, the memory 1003 may include a combination of the foregoing types of memories.

The processor 1002 and the memory 1003 may be coupled through a port, or may be integrated together. This is not limited in this embodiment.

The plurality of ports 1001a to 1001c and the processor 1002 may be used in the port management method for the user access equipment in the embodiments shown in FIG. 5 to FIG. 8b, and a specific implementation is as follows:
the downlink port 1001a, configured to receive the at least two uplink data packets, where the at least two uplink data packets include a first uplink data packet and a second uplink data packet, the first uplink data packet includes data of a first service type, the second uplink data packet includes data of a second service type, and the first service type and the second service type have a same class of service;
the at least two uplink ports, where IP addresses of the at least two uplink ports each are a first IP address; and
the processor 1002, configured to set source IP addresses of the first uplink data packet and the second uplink data packet each to the first IP address, and set VLAN values of the first uplink data packet and the second uplink data packet to different VLAN values, where
any one uplink port 1001b or 1001c in the at least two uplink ports is configured to send a processed first uplink data packet and a processed second uplink data packet.

In an implementation, any two different uplink ports 1001b and 1001c in the at least two uplink ports are configured to send the at least two processed uplink data packets.

In an implementation, the processor 1002 is further configured to:
determine that a service type of the first uplink data packet in the at least two uplink data packets is the first service type, and a service type of the second uplink data packet is the second service type.

In an implementation, the processor 1002 is further configured to:
set source IP addresses of the first uplink data packet and the second uplink data packet each to the first IP address; and
set VLAN values of the first uplink data packet and the second uplink data packet to different VLAN values.

In an implementation, that any two different uplink ports 1001b and 1001c in the at least two uplink ports are configured to send the at least two processed uplink data packets includes:

A first uplink port 1001b in any two uplink ports is configured to send the first uplink data packet, and a second uplink port 1001c in the any two uplink ports is configured to send the second uplink data packet, and the first uplink port 1001b and the second uplink port 1001c have a same IP address and different VLAN values.

In an implementation, the first uplink data packet and the second uplink data packet have a same destination IP address, the first uplink data packet is sent from the first uplink port belonging to a first VLAN, and the second uplink data packet is sent from the second uplink port belonging to a second VLAN.

In an implementation, the first uplink data packet and the second uplink data packet have different destination IP addresses, and the first uplink data packet and the second uplink data packet are sent from the any two different uplink ports.

In an implementation, any two uplink ports 1001b and 1001c in the at least two uplink ports are configured to receive at least two downlink data packets, where the any two uplink ports 1001b and 1001c have a same IP address and different VLAN values, the at least two downlink data packets include a first downlink data packet and a second downlink data packet, the first downlink data packet includes data of the first service type, the second downlink data packet includes data of the second service type, and fields in the at least two downlink data packets include a same IP address and different VLAN values.

The downlink port 1001a is further configured to send the at least two downlink data packets to a terminal through different downlink paths.

In an implementation, that any two uplink ports 1001b and 1001c in the at least two uplink ports are configured to receive at least two downlink data packets includes:
A first uplink port 1001b that belongs to a first VLAN and that is in the at least two uplink ports is configured to receive the first downlink data packet, and a second uplink port 1001c that belongs to a second VLAN and that is in the at least two uplink ports is configured to receive the second downlink data packet.

An embodiment of this application provides a computer-readable storage medium. The computer-readable storage medium stores a program or instructions. When the program or the instructions is/are run on a computer, the computer is enabled to perform the port management method for the user access equipment in embodiments of this application.

An embodiment of this application provides a chip or a chip system. The chip or the chip system includes at least one processor and a port, the port is interconnected to the at least one processor through a line, and the at least one processor is configured to run a computer program or instructions, to perform the port management method for the user access equipment in embodiments of this application.

The port in the chip may be an input/output port, a pin, a circuit, or the like.

The chip system in the foregoing aspects may be a system-on-a-chip (system-on-a-chip, SOC), a baseband chip, or the like. The baseband chip may include a processor, a channel encoder, a digital signal processor, a modem, a port module, and the like.

In an implementation, the chip or the chip system described in this application further includes at least one memory, and the at least one memory stores instructions. The memory may be a storage unit inside the chip, for example, a register or a cache, or may be a storage unit (for example, a read-only memory or a random access memory) of the chip.

All or a part of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer instructions are loaded and executed on the computer, all or a part of the procedures or functions according to embodiments of this application are generated. The computer may be a general-purpose computer, a dedicated computer, a computer network, or other programmable apparatuses. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, a fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid-state drive (solid state disk, SSD)), or the like.

A person of ordinary skill in the art may be aware that, in combination with the examples described in embodiments disclosed in this specification, units and algorithm steps can be implemented by electronic hardware, computer software, or a combination thereof. To clearly describe the interchangeability between the hardware and the software, the foregoing has generally described compositions and steps of each example according to functions. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A port management method for user access equipment, wherein the method comprises:
receiving, by the user access equipment, at least two uplink data packets, wherein the at least two uplink data packets comprise a first uplink data packet and a second uplink data packet, the first uplink data packet comprises data of a first service type, the second uplink data packet comprises data of a second service type, and the first service type and the second service type have a same class of service; and
sending, by the user access equipment, a processed first uplink data packet or a processed second uplink data packet through any one of at least two uplink ports, wherein IP addresses of the at least two uplink ports each are a first IP address, source IP addresses of the processed first uplink data packet and the processed second uplink data packet each are the first IP address, and the first uplink data packet and the second uplink data packet have different VLAN values.

2. The method according to claim 1, wherein the method further comprises:
sending, by the user access equipment, at least two processed uplink data packets through any two different uplink ports in the at least two uplink ports.

3. The method according to claim 1, wherein after the receiving, by the user access equipment, at least two uplink data packets, the method further comprises:
determining, by the user access equipment, that a service type of the first uplink data packet in the at least two uplink data packets is the first service type, and a service type of the second uplink data packet is the second service type.

4. The method according to any one of claims 1 to 3, wherein the method further comprises:
setting, by the user access equipment, source IP addresses of the first uplink data packet and the second uplink data packet each to the first IP address; and
setting, by the user access equipment, VLAN values of the first uplink data packet and the second uplink data packet to different VLAN values.

5. The method according to claim 2, wherein the sending, by the user access equipment, at least two processed uplink data packets through any two different uplink ports in the at least two uplink ports comprises:
sending, by the user access equipment, the first uplink data packet through a first uplink port in the any two uplink ports, and sending the second uplink data packet through a second uplink port in the any two uplink ports, wherein the first uplink port and the second uplink port have a same IP address and different VLAN values.

6. The method according to claim 5, wherein the first uplink data packet and the second uplink data packet have a same destination IP address, the first uplink data packet is sent from the first uplink port belonging to a first VLAN, and the second uplink data packet is sent from the second uplink port belonging to a second VLAN.

7. The method according to claim 5, wherein the first uplink data packet and the second uplink data packet have different destination IP addresses, and the first uplink data packet and the second uplink data packet are sent from the any two different uplink ports.

8. The method according to claim 1, wherein the method further comprises:
receiving, by the user access equipment, at least two downlink data packets through at least two uplink ports, wherein any two uplink ports have a same IP address and different VLAN values, the at least two downlink data packets comprise a first downlink data packet and a second downlink data packet, the first downlink data packet comprises data of the first service type, the second downlink data packet comprises data of the second service type, and fields in the at least two downlink data packets comprise a same destination IP address and different VLAN values; and
sending, by the user access equipment, the at least two downlink data packets to a terminal through different downlink paths.

9. The method according to claim 8, wherein the receiving, by the user access equipment, at least two downlink data packets through the at least two uplink ports comprises:
receiving, by the user access equipment, the first downlink data packet through a first uplink port belonging to a first VLAN, and receiving the second downlink data packet through a second uplink port belonging to a second VLAN.

10. User access equipment, comprising:
a downlink port, configured to receive at least two uplink data packets, wherein the at least two uplink data packets comprise a first uplink data packet and a second uplink data packet, the first uplink data packet comprises data of a first service type, the second uplink data packet comprises data of a second service type, and the first service type and the second service type have a same class of service;
at least two uplink ports, wherein IP addresses of the at least two uplink ports each are a first IP address; and
a processor, configured to set source IP addresses of the first uplink data packet and the second uplink data packet each to the first IP address, and set VLAN values of the first uplink data packet and the second uplink data packet to different VLAN values, wherein
any one of the at least two uplink ports is configured to send a processed first uplink data packet or a processed second uplink data packet.

11. The equipment according to claim 10, wherein any two different uplink ports in the at least two uplink ports are configured to send at least two processed uplink data packets.

12. The equipment according to claim 10, wherein the processor is further configured to:
determine that a service type of the first uplink data packet in the at least two uplink data packets is the first service type, and a service type of the second uplink data packet is the second service type.

13. The equipment according to any one of claims 10 to 12, wherein the processor is further configured to:
set source IP addresses of the first uplink data packet and the second uplink data packet each to the first IP address; and
set VLAN values of the first uplink data packet and the second uplink data packet to different VLAN values.

14. The equipment according to claim 11, wherein that any two different uplink ports in the at least two uplink ports are configured to send at least two processed uplink data packets comprises:
a first uplink port in the any two uplink ports is configured to send the first uplink data packet, a second uplink port in the any two uplink ports is configured to send the second uplink data packet, and the first uplink port and the second uplink port have a same IP address and different VLAN values.

15. The equipment according to claim 14, wherein the first uplink data packet and the second uplink data packet have a same destination IP address, the first uplink data packet is sent from the first uplink port belonging to a first VLAN, and the second uplink data packet is sent from the second uplink port belonging to a second VLAN.

16. The equipment according to claim 14, wherein the first uplink data packet and the second uplink data packet have different destination IP addresses, and the first uplink data packet and the second uplink data packet are sent from the any two different uplink ports.

17. The equipment according to claim 10 or 11, wherein the at least two uplink ports are configured to receive at least two downlink data packets, any two uplink ports have a same IP address and different VLAN values, the at least two downlink data packets comprise a first downlink data packet and a second downlink data packet, the first downlink data packet comprises data of the first service type, the second downlink data packet comprises data of the second service type, and fields in the at least two downlink data packets comprise a same destination IP address and different VLAN values; and
the downlink port is further configured to send the at least two downlink data packets to a terminal through different downlink paths.

18. The equipment according to claim 17, wherein that the at least two uplink ports are configured to receive at least two downlink data packets comprises:
a first uplink port that belongs to a first VLAN and that is in the at least two uplink ports is configured to receive the first downlink data packet, and a second uplink port that belongs to a second VLAN and that is in the at least two uplink ports is configured to receive the second downlink data packet.

19. A chip, comprising a memory and a processor, wherein
the memory is configured to store a program or instructions; and
the processor is configured to run the program or the instructions to perform the method according to any one of claims 1 to 9.
